# DEMANDE DE BREVET EUROPEEN

(11) **EP 1 074 332 A1**
(43) Date de publication de la demande: **07.02.2001**
(21) Numéro de dépôt: 00401636.6
(22) Date de dépôt: 09.06.2000
(51) Int. Cl.: B23P 19/04

(54) **Procédé de recyclage de palettes en bois et installation pour la mise en oeuvre d'un tel procédé**

(30) Priorité: 30.07.1999 FR 9909923
(71) Demandeur: Alliot, Véronique (épouse Bouchain), 75016 Paris (FR); Bouchain, Alain, 75016 Paris (FR)
(72) Inventeur: Alliot, Véronique (épouse Bouchain), 75016 Paris (FR); Bouchain, Alain, 75016 Paris (FR)
(74) Mandataire: Loyer, Bertrand

(57) **Abrégé**

Un procédé de recyclage de palettes en bois consistant à :
- effectuer un premier triage dans la zone de réception (10) entre les palettes aisément réparables et celles qui ne le sont pas et les diriger vers deux convoyeurs : un convoyeur (11) qui les achemine vers un poste de démontage (20); un deuxième qui les achemine vers un poste de réparation (30);
- séparer les nappes les unes des autres par sciage au poste de démontage, ce qui a pour effet que tous les éléments constitutifs de la palette sont séparés les uns des autres ;
- trier et recalibrer les éléments ainsi séparés par des moyens de triage, de sciage et de rabotage (21, 22);
- stocker les éléments ainsi triés et recalibrés dans un poste de stockage (40) qui s'étend le long de l'installation ;
- enlever un par un les éléments détériorés au poste de réparation ;
- amener par un distributeur (60) situé entre le poste de réparation (30) et un poste de reconstitution (50) les éléments triés et recalibrés se trouvant au poste de stockage (40) afin d'effectuer le remplacement des éléments retirés au poste (30) ou la reconstitution de nouvelles palettes.

## Description

La présente invention a pour objet un procédé de recyclage de palettes en bois.

Du fait de la diffusion des engins de manutention, il est devenu courant de déposer les produits ou marchandises sur des palettes en bois. Il y en a donc des millions en circulation de toutes sortes et de toutes tailles. Il arrive très fréquemment qu'elles soient plus ou moins détériorées ou de dimension non commercialisable en l'état et une grande quantité de palettes est mise au rebut alors qu'elles pourraient être réparées ou redimensionnées, parce que leur réparation se fait actuellement avec des moyens insuffisants nécessitant beaucoup de main d'oeuvre et donc revenant trop cher.

Le procédé selon l'invention consiste à :
- effectuer manuellement un premier tri entre les palettes aisément commercialisables après réparation ou rectifiage et celles qui doivent être complètement démontées; celles qui peuvent être commercialisables après réparation ou rectifiage étant disposées sur un convoyeur les amenant à un poste de réparation et les autres étant disposées sur un autre convoyeur les amenant à un poste de désassemblage ;
- puis dans le poste de désassemblage, à découper chaque palette en séparant les unes des autres par sciage les différentes nappes constituant la palette (frises, traverses, semelles, dés, chevrons) de sorte que tous les éléments soient séparés les uns des autres ;
- puis dans un poste de triage, à trier lesdits éléments séparés en fonction de leurs dimensions, à les mettre par sciage à un certain nombre de dimensions standard lorsqu'ils sont trop longs, à mettre au rebut ceux qui sont trop gravement endommagés ; ces opérations étant faites automatiquement par des robots munis de palpeurs et de détecteurs optiques ;
- puis à stocker par piles, au moyen d'un transporteur automatisé lesdits éléments en fonction de leurs dimensions ;
- puis à utiliser les éléments ainsi stockés soit pour réparer les palettes endommagées dans un poste de réparation, soit pour reconstituer de nouvelles palettes dans un poste de reconstruction.

Le procédé selon la présente invention est également caractérisé par les dispositions suivantes :
a). Le poste de réparation comporte : un poste de rectifiage par sciage dans lequel les éléments constitutifs de la palette peuvent être séparés individuellement ; ainsi qu'un poste de sciage dans lequel les éléments périphériques sont coupés sans qu'ils soient désolidarisés les uns des autres.
b). le poste de désassemblage comporte une table munie d'une pluralité de moyens de sciage traversés successivement par la palette en cours de démontage.
c). Le poste de réparation et le poste de reconstruction sont alimentés par moyen de distribution en produits provenant du poste de stockage.
d). De préférence, le moyen de distribution est disposé entre le poste de réparation et le poste de reconstruction et est alimenté en provenance du poste de stockage, par un moyen transporteur automatisé.
e). De préférence également, un poste de produits neufs est disposé à proximité du distributeur afin de pallier un éventuel manque d'éléments recyclés.

A titre d'exemple et pour faciliter la compréhension de l'invention, on a représenté :
- Figure 1 une vue en élévation latérale illustrant cinq types les plus courants de palettes se trouvant sur le marché.
- Figure 2 un plan schématique d'une installation mettant en oeuvre le procédé selon l'invention.

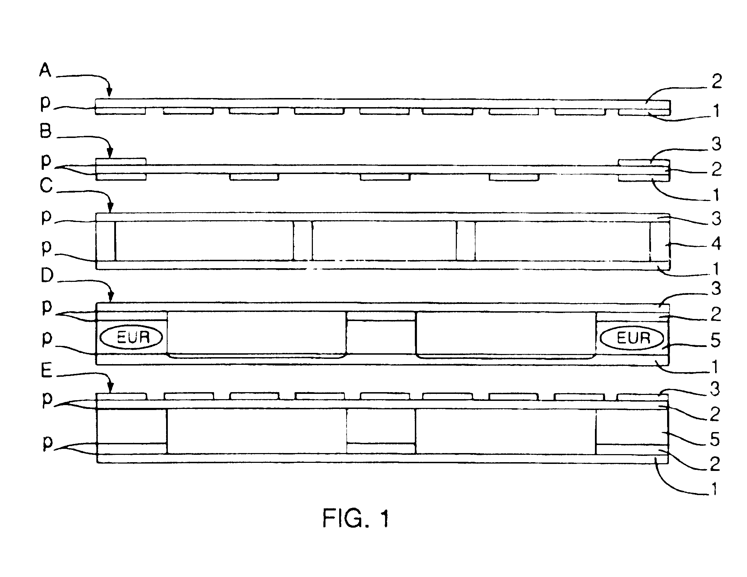

La figure 1 représente cinq types de produits, en eux-mêmes connus, visés par la présente invention, les produits A et B étant appelés « couvercles » et les produits C, D et E étant appelés « palettes ».

La référence A désigne ce que l'on appelle un couvercle à deux nappes, la nappe inférieure étant constituée de planchettes 1 disposées parallèlement à une certaine distance les unes des autres, cette nappe inférieure étant recouverte d'une nappe supérieure, constituée de planchettes 2 disposées parallèlement les unes aux autres avec un certain écartement, ces planchettes 2 étant perpendiculaires aux planchettes 1. Les planchettes 1 s'appellent « semelles » ; les planchettes 2 s'appellent « traverses ».

La référence B désigne ce l'on appelle un couvercle à trois nappes : la nappe inférieure est constituée de semelles 1, la nappe intermédiaire de traverses 2 et la nappe supérieure de « frises » 3.

La référence C désigne ce que l'on appelle une palette à trois nappes. La nappe inférieure est constituée par les semelles 1, la nappe supérieure par les traverses 2 ; l'écartement entre ces deux nappes, qui détermine la hauteur de la palette est assuré par des « chevrons » 4, qui sont posés de chant.

La référence D désigne ce que l'on appelle une palette à quatre nappes. La nappe inférieure est constituée par les semelles 1 ; au-dessus sont disposés des blocs 5 appelés « dés » ; sur les dés 5 sont placées des traverses 2 ; et au-dessus des traverses 2 sont placées des frises 3.

La référence E désigne ce qu'on appelle une palette à cinq nappes. La nappe inférieure est constituée par les semelles 1 ; au-dessus des semelles 1 sont placées les traverses 2 ; au-dessus des traverses 2 sont placés des dés 5 ; sur les dés 5 est placée une deuxième couche de traverses 2 ; sur ces traverses 2 sont placées des frises 3.

Tous ces éléments : semelles 1, traverses 2, frises 3, chevrons 4, dés 5 sont fixés les uns aux autres par cloutage ou agrafage, avec des agrafes métalliques.

On voit que si l'on fait passer dans chaque plan p séparant deux nappes le ruban d'une scie à ruban capable de cisailler des clous ou des agrafes, tous les éléments constitutifs d'une palette (ou d'un couvercle) à savoir : les planchettes de semelles, traverses ou frises ainsi que les chevrons ou les dés sont séparés les uns des autres.

On pourra donc, s'il n'y a qu'une ou deux planchettes de la nappe inférieure (semelle) ou supérieure (frise) détériorées, réparer la palette (ou couvercle) en ne détachant que l'élément détérioré pour le remplacer ; mais si les éléments détériorés sont trop nombreux ou situés dans des nappes intermédiaires, la réparation n'est plus possible.

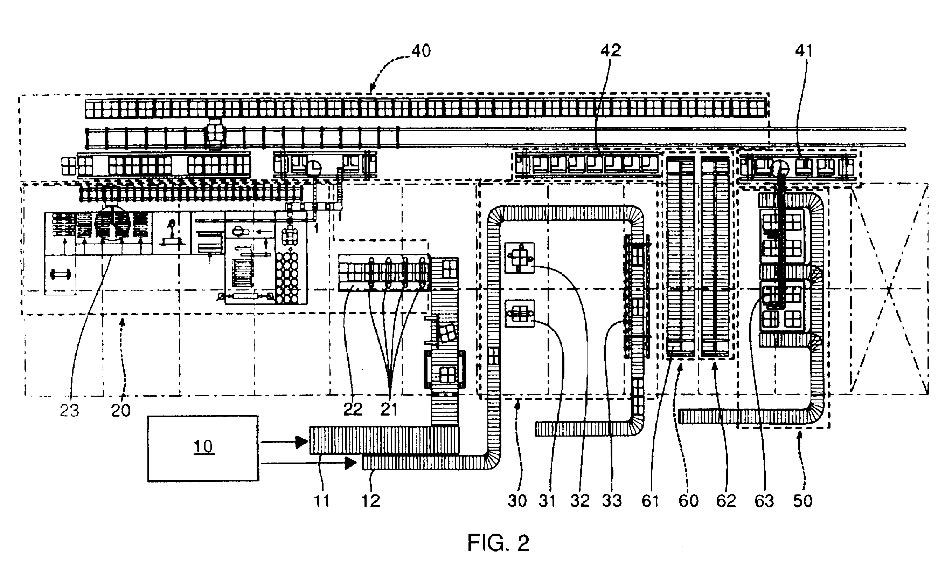

En se reportant à la figure 2, on voit que dans un premier poste 1 les palettes et/ou couvercles de récupération sont séparés en deux groupes : un premier groupe constitué des produits non commercialisable après réparation ou rectifiage et un deuxième groupe constitué des produits réparables.

Le premier groupe est acheminé vers un convoyeur 11, qui dirige les produits vers un poste de démontage 20 ; le deuxième groupe est acheminé vers un convoyeur 12 qui dirige les produits vers un poste de réparation 30.

Le poste de démontage ou désassemblage 20 comporte une pluralité de scies à ruban 21 (quatre dans l'exemple représenté) qui séparent les nappes les unes après les autres ; de sorte qu'en sortie de la table 22 les palettes et/ou couvercles soient entièrement désassemblés, les éléments constitutifs planchettes, dés ou chevrons étant séparés les uns des autres.

Ces éléments séparés arrivent dans une zone 23 où ils sont triés en fonction de leurs dimensions et éventuellement remis à des cotes prédéterminées par sciage.

Certaines palettes peuvent comporter des frises 3 d'une épaisseur inusuelle : ces planchettes seront démontées et remplacées.

Les éléments ainsi triés et remis aux dimensions voulues sont alors stockés en groupes séparés en fonction de leurs dimensions dans une zone de stockage 40.

Cette zone de stockage s'étend sur pratiquement toute la longueur latérale de l'installation.

Le poste de réparation 30 jouxte le poste de désassemblage 20.

Il comporte une table de sciage 31 à un seul ruban, la largeur du ruban étant inférieure à l'espace séparant deux planchettes (semelle ou frise) de sorte que l'on peut détacher les planchettes une par une.

Ce poste comporte également une table 32 de rectifiage qui permet d'éliminer les marquages devenus indésirables et de couper les éléments périphériques sans qu'ils fussent désolidarisés les uns des autres.

Puis dans la zone 33, on remplace les éléments détériorés qui ont été éliminés lors du passage sur la table 31 soit avec les éléments rectifiés en 32 soit avec des éléments alimentés par le convoyeur 61 en provenance de la zone de stockage 40.

En effet, ce poste 30 est longé par le poste de stockage 40, de sorte qu'il est très facile d'acheminer du poste de stockage 40 au moyen du convoyeur 60 vers le poste de réparation 33 les pièces de remplacement.

L'installation comporte en outre un poste 50 de reconstitution de palettes à partir des éléments se trouvant au poste de stockage.

Entre le poste de reconstitution 50 et le poste de réparation 30, se trouve un dispositif distributeur 60 qui prend les éléments stockés au poste de stockage 40 et les distribue soit au poste de réparation 30 par le convoyeur 61, soit au poste de reconstitution 50 par le convoyeur 62.

On peut également disposer en plus des convoyeurs 61 et 62 un troisième convoyeur 63 pour alimenter le poste 50 en dés neufs.

On peut également disposer de part et d'autre du distributeur 60, des zones additionnelles de stockage 41 et 42 qui sont alimentées en éléments neufs afin de pallier un manque éventuel d'éléments de récupération.

Les éléments qui sont démontés aux postes 20 et 30 et qui sont inutilisables sont envoyés dans un broyeur et les copeaux utilisés dans un générateur de vapeur.

Le poste 50 est équipé des moyens de manutention et de stockage et de clouage (ou agrafage) utilisés habituellement pour fabriquer des palettes. Il est alimenté soit en éléments récupérés stockés au poste 40, soit d'éléments neufs provenant des zones 41 et 42 ; le tout de façon à reconstituer de nouvelles palettes avec des éléments de récupération.

Le procédé et l'installation selon la présente invention permettent la récupération d'un grand nombre de palettes qui sont actuellement abandonnées ou brûlées en plein air.

## Revendications

1. Procédé de recyclage de palettes en bois consistant à :
- effectuer un premier triage dans la zone de réception (10) entre les palettes aisément réparables et celles qui ne le sont pas et les diriger vers deux convoyeurs : un convoyeur (11) qui les achemine vers un poste de démontage (20) ; un deuxième qui les achemine vers un poste de réparation (30) ;
- séparer les nappes les unes des autres par sciage au poste de démontage, ce qui a pour effet que tous les éléments constitutifs de la palette sont séparés les uns des autres ;
- trier et recalibrer les éléments ainsi séparés par des moyens de triage, et de sciage (21, 22) ;
- stocker les éléments ainsi triés et recalibrés dans un poste de stockage (40) qui s'étend le long de l'installation ;
- enlever un par un les éléments détériorés au poste de réparation ;
- amener par un distributeur (60) situé entre le poste de réparation (30) et un poste de reconstitution (50) les éléments triés et recalibrés se trouvant au poste de stockage (40) afin d'effectuer le remplacement des éléments retirés au poste (30) ou la reconstitution de nouvelles palettes.

2. Procédé selon la revendication 1, selon lequel les éléments détériorés non rentabilisables sont mis au rebut, broyés et brûlés dans un brûleur associé à une source de vapeur.

3. Installation pour la mise en oeuvre du procédé selon la revendication 2, caractérisé par le fait qu'elle comporte :
- un poste de triage (10),
- un poste de démontage (20),
- un poste de réparation (30),
- un poste de stockage (40),
- un poste de reconstitution (50).

4. installation selon la revendication 3 comportant, à la sortie du poste de triage (10) un convoyeur (11) alimentant le poste de démontage (20) et un convoyeur (12) alimentant le poste de réparation.

5. Installation selon la revendication 3, caractérisée par le fait qu'elle comporte un distributeur (60) disposé entre le poste de réparation et le poste de reconstitution pour les alimenter en éléments servant à la réparation ou à la reconstitution de nouvelles palettes.

6. Installation selon la revendication 3, dans laquelle le poste de démontage comporte une table (21) munie d'une pluralité de moyens de sciage qui séparent les nappes les unes des autres, ce qui sépare tous les éléments les uns des autres.

7. installation selon la revendication 5, caractérisée par le fait qu'elle comporte des moyens permettant de trier les éléments en fonction de leurs dimensions et de les recalibrer si nécessaire.

8. Installation selon la revendication 3, comportant un poste de stockage (40) dans lequel sont stockés les éléments triés et recalibrés.

9. Installation selon les revendications 3, 5 et 8 dans laquelle le poste de reconstitution comporte les moyens usuels de fabrication de palettes alimenté en éléments par le poste de stockage.

10. Installation selon l'une quelconque des revendications 3 à 9, comportant au moins une zone de stockage (41 et/ou 42) d'éléments neufs pour compléter éventuellement un manque d'éléments recyclés en provenance du stockage (40).
